(19) Europäisches Patentamt
European Patent Office
Office européen des brevets

(11) **EP 1 861 292 B1**

(12) **EUROPÄISCHE PATENTSCHRIFT**

(45) Veröffentlichungstag und Bekanntmachung des Hinweises auf die Patenterteilung:
**06.08.2008 Patentblatt 2008/32**

(51) Int Cl.:
***B60R 21/01*** *(2006.01)* ***B60W 40/10*** *(2006.01)*

(21) Anmeldenummer: **06707800.6**

(22) Anmeldetag: **24.01.2006**

(86) Internationale Anmeldenummer:
**PCT/EP2006/050380**

(87) Internationale Veröffentlichungsnummer:
**WO 2006/094856 (14.09.2006 Gazette 2006/37)**

(54) **VERFAHREN UND VORRICHTUNG ZUR WANKWINKELBESTIMMUNG FÜR INSASSENSCHUTZVORRICHTUNGEN**

METHOD AND DEVICE FOR DETERMINING THE ROLLING ANGLE FOR PASSENGER PROTECTION DEVICES

PROCEDE ET DISPOSITIF POUR DETERMINER L'ANGLE DE TANGAGE DE DISPOSITIFS DE PROTECTION DES PASSAGERS

(84) Benannte Vertragsstaaten:
**DE ES FR GB**

(30) Priorität: **11.03.2005 DE 102005011243**

(43) Veröffentlichungstag der Anmeldung:
**05.12.2007 Patentblatt 2007/49**

(73) Patentinhaber: **ROBERT BOSCH GMBH**
**70442 Stuttgart (DE)**

(72) Erfinder:
• **SCHMID, Michael**
**70806 Kornwestheim (DE)**
• **GOLOMBECK, Marc-Andre**
**70839 Gerlingen (DE)**
• **DÖRR, Alfons**
**70597 Stuttgart (DE)**

(56) Entgegenhaltungen:
**EP-A- 1 258 399**

## Beschreibung

Stand der Technik

Die Erfindung geht aus von einem Verfahren zur Wankwinkelbestimmung für Insassenschutzvorrichtungen nach der Gattung des unabhängigen Patentanspruchs 1 und von einer zugehörigen Vorrichtung.

Zahlen aus den USA belegen die Bedeutung der passiven Sicherheit bei Fahrzeugüberschlägen. Im Jahr 1998 war die Hälfte aller tödlichen Einzelfahrzeugunfälle auf einen Überschlag zurückzuführen. Im gesamten Unfallgeschehen nimmt der Fahrzeugüberschlag einen Anteil von rund 20 Prozent ein.

Herkömmliche Systeme zur Überschlagserkennung betrachten die Wankbewegung und die Beschleunigungen in x-, y- und z-Richtung des Fahrzeugs. Auf dieser Basis ist eine sichere Erkennung eines Fahrzeugüberschlags möglich, wobei die Entscheidung, ob ein Überschlag vorliegt, jedoch erst zu einem späten Zeitpunkt des Überschlags sicher getroffen wird. Bei bestimmten Fällen von Fahrzeugüberschlägen, welchen ein fahrdynamisches Manöver vorausgeht, erfährt der Insasse hohe laterale Beschleunigungen. Derartige Manöver können beispielsweise zu so genannten Soil-Trip-Überschlägen führen. Diesbezüglich besteht hinsichtlich des Auslöseverhaltens noch Potential für zukünftige Insassenschutzsysteme.

Bekannte Verfahren beruhen beispielsweise auf der Auswertung eines Drehratensensors und zwei Beschleunigungssensoren, welche in einem zentralen Airbagsteuergerät integriert sind. Der Drehratensensor ermittelt nach dem Kreiselprinzip die Rotationsgeschwindigkeit um die Fahrzeuglängsachse und die Beschleunigungssensoren messen zusätzlich die Fahrzeugbeschleunigung in Quer- und Hochrichtung. Im Hauptalgorithmus wird dann die Drehrate ausgewertet. Mit den Messwerten der Beschleunigungssensoren lässt sich zum einen die Art des Überschlags erkennen, zum anderen dienen diese Werte der Plausibilitätsprüfung. Erkennt der Drehratenalgorithmus einen Überschlag, werden die Sicherheitsvorrichtungen nur bei gleichzeitiger Freigabe durch die Plausibilitätskontrolle aktiviert.

Bei einem anderen bekannten Verfahren wird eine rechtzeitige Auslöseentscheidung bei Überschlägen mit hoher lateraler Beschleunigung dadurch ermöglicht, dass ein Schwimmwinkel und die laterale Geschwindigkeit des Fahrzeugs einbezogen werden. Bei einem bekannten Verfahren zur erweiterten Überrollerkennung wird aus einer Gierrate und der Fahrzeuggeschwindigkeit in longitudinaler Richtung unter Berücksichtigung der lateralen Beschleunigung eine Schätzung für die laterale Geschwindigkeit durchgeführt, welche beim seitlichen Abdriften in den Grünstreifen ein Maß für die Überrollwahrscheinlichkeit des Fahrzeugs darstellt. Zur Bestimmung der lateralen Geschwindigkeit wird ebenfalls der so genannte Schwimmwinkel herangezogen.

Generell sind bei Überschlägen frühzeitige Auslöseentscheidungen für die Insassenschutzmittel, z.B. für Window-Airbags, sinnvoll und notwendig. Neben der lateralen Fahrzeuggeschwindigkeit stellt daher der Wankwinkel zu Beginn eines solchen Überschlagsvorganges eine wichtige Größe zur Vorausberechnung des Überschlagsgeschehens dar. Insbesondere spielt der Wankwinkel in Fällen von Auslöseentscheidungen für irreversible Insassenschutzmittel eine wichtige Rolle, wobei die Auslöseentscheidung in Kenntnis des Wankwinkels entsprechend früher erfolgen kann.

Bei den bisher bekannten technischen Lösungen werden die Signale des Quer- und Hochbeschleunigungssensors lediglich zur Erkennung der Art des Überschlages und zur Plausibilisierung der mit einem Wankratensensor gemessenen Wankrate und des daraus berechneten Wankwinkels verwendet. So wird beispielsweise in der WO 2001/044020 ein Verfahren zur Bestimmung des Absolutdrehwinkels eines sich um eine etwa waagrechte Achse drehenden Gegenstandes beschrieben, bei welchem mit einem Hochbeschleunigungssensor und einem Wankratensensor der Absolutdrehwinkel des Fahrzeugs in einem beschränkten Intervall ermittelt werden kann.

Bei den bekannten Verfahren erfolgt die Schätzung des Wankwinkels nicht unabhängig von einem Wankratensensor, welcher idealerweise eine unabhängige Winkelschätzung durch zeitliche Aufintegration der Wankrate liefern sollte. Darüber hinaus ist die Bestimmung von sehr kleinen Wankwinkeln (< 5°) aufgrund von Sensorrauschen des Wankratensensors sehr schwierig.

Aus der gattungsgemäßen EP 1 258 399 A2 ist es bekannt, mittels eines Drehbeschleunigungssensors größere Messfrequenzen zu erzielen und somit, insbesondere bei Soil-Trips, eine rechtzeitige Auslöseentscheidung zu ermöglichen. Zusätzlich können noch als Messwerte die Fahrzeugquer- und Fahrzeugvertikalbeschleunigung berücksichtigt werden.

Vorteile der Erfindung

Das erfindungsgemäße Verfahren zur Wankwinkelbestimmung für Insassenschutzvorrichtungen mit den Merkmalen des unabhängigen Patentanspruchs 1 hat demgegenüber den Vorteil, dass der Wankwinkel unabhängig von einem Wankratensensor und ohne Einschränkung des Wankwinkelbereichs mit Hilfe der Signale eines Querbeschleunigungssensors und eines Hochbeschleunigungssensors kontinuierlich geschätzt werden kann und beispielsweise zu einem frühen Zeitpunkt mindestens einem Auslöseverfahren für Insassenschutzmittel zur Verfügung gestellt werden kann. Durch den bereitgestellten Wankwinkel können nachfolgende Auslöseverfahren für Insassenschutzsysteme Fahrzeugüberschläge frühzeitig erkennen, wodurch gewährleistet werden kann, dass Sicherheitsvorrichtungen wie Gurtstraffer, Kopfairbag, Window-Airbag und Überrollbügel rechtzeitig aktiviert werden und sich somit das Verletzungsrisiko verringert. In vorteilhafter Weise ermöglicht das erfindungsgemäße Verfahren zur Wankwinkelbestimmung eine Verbesserung der Berechnung von Auslöseentscheidungen für Insassenschutzsysteme.

Als weiterer Vorteil erhöht das erfindungsgemäße Verfahren zur Wankwinkelbestimmung, insbesondere im Bereich von kleinen Wankwinkeln, die Robustheit der nachgeschalteten Auslöseverfahren und verbessert deren Rücksetzverhalten. Dadurch kann in vorteilhafter Weise eine verbesserte Auslöseleistungsfähigkeit erreicht werden und stabile Fahrsituationen und Misuses besser erkannt und eine versehentliche Auslösung von irreversiblen Rückhaltemitteln verhindert werden.

Zudem kann das erfindungsgemäße Verfahren zur Schätzung des Wankwinkels zusätzlich zu einem Wankratensensor eingesetzt werden, um in vorteilhafter Weise die Wankwinkelschätzung über den Wankratensensor zu stützen. Hierbei kann ein Wankratensensordrift oder eine Aufintegration eines Offsets wirkungsvoll unterdrückt werden. Mit Hilfe des erfindungsgemäßen Verfahrens lassen sich Fahrsituationen sicher unterscheiden, der Wankwinkel alternativ bestimmen und damit das Rücksetzverhalten des durch Aufintegration bestimmten Wankwinkels verbessern. Daher werden durch die zusätzliche Möglichkeit der Wankwinkelbestimmung das Auslöseverhalten und das Rücksetzverhalten der Auslöseverfahren weiter verbessert.

Die erfindungsgemäße Vorrichtung zur Wankwinkelbestimmung für Insassenschutzvorrichtungen mit den Merkmalen des unabhängigen Patentanspruchs 10 hat den Vorteil, dass zwei Beschleunigungssensoren zur Erfassung der Querbeschleunigung und zur Erfassung der Hochbeschleunigung verwendet werden können, so dass auf einen Wankwinkelsensor verzichtet werden kann. Durch den Verzicht auf den Wankratensensor können die Kosten für das zugehörige Steuergerät gesenkt werden. Wird die erfindungsgemäße Vorrichtung als alternativer Pfad und zur Stützung der Wankwinkelberechnung eingesetzt, dann stehen in vorteilhafter Weise zwei alternative Pfade zur Wankwinkelbestimmung zur Verfügung, wodurch die Robustheit der Auslöseverfahren für Insassenschutzvorrichtungen erhöht wird.

Erfindungsgemäß ist, dass die erfasste Querbeschleunigung mit einem ersten Schwellwert verglichen wird und die erfasste Hochbeschleunigung mit einem zweiten Schwellwert verglichen wird. Dadurch kann in vorteilhafter Weise grob geschätzt werden, ob der augenblickliche Wankwinkel ein kleinerer Wankwinkel, z.B. kleiner oder gleich 10° ist, oder ein größerer Wankwinkel ist, z.B. größer als 10°. Liegt ein größerer Wankwinkel vor, d.h. wenn die Querbeschleunigung größer als der erste Schwellwert ist und die Hochbeschleunigung größer als der zweite Schwellwert ist, dann wird die nachfolgende genauere Schätzung mit einer ersten Näherung durchgeführt. Liegt ein kleinerer Wankwinkel vor, d.h. wenn die Querbeschleunigung kleiner oder gleich dem ersten Schwellwert ist und/oder die Hochbeschleunigung kleiner oder gleich dem zweiten Schwellwert ist, dann wird die nachfolgende genauere Schätzung mit einer zweiten Näherung durchgeführt, welche weniger Rechenoperationen erfordert und daher schneller ausgeführt werden kann.

Zur Schätzung des Wankwinkels werden die trigonometrischen Funktionen durch die zugehörigen Taylorreihenentwicklungen angenähert, wobei für die erste und zweite Näherung eine Sinusfunktion des Wankwinkels nach dem Zusammenhang $\sin \alpha \approx \alpha + o(\alpha^2)$ angenähert wird, und eine Kosinusfunktion des Wankwinkels für die erste Näherung nach dem Zusammenhang $\cos \alpha \approx 1 - (\alpha^2/2) + o(\alpha^4)$ angenähert wird, und für die zweite Näherung nach dem Zusammenhang $\cos \alpha \approx 1 + o(\alpha^2)$ angenähert wird. Bei der ersten und zweiten Näherung werden jeweils die höheren Ordnungen der Potenz des Wankwinkels vernachlässigt.

Durch die in den abhängigen Ansprüchen aufgeführten Maßnahmen und Weiterbildungen sind vorteilhafte Verbesserungen des im unabhängigen Patentanspruch angegebenen Verfahrens zur Wankwinkelbestimmung für Insassenschutzvorrichtungen möglich.

Insbesondere ist es vorteilhaft, dass der geschätzte Wankwinkel mit einem Grenzwinkel verglichen wird, wobei ein Fehlerflag gesetzt wird, wenn der geschätzte Wankwinkel den Grenzwinkel übersteigt, und wobei sonst der geschätzte Wankwinkel ausgegeben wird. Dadurch wird vermieden, dass unplausible Wankwinkel bei den nachfolgenden Auslöseverfahren der Insassenschutzmittel verwendet werden.

Ausführungsbeispiele der Erfindung sind in der Zeichnung dargestellt und werden in der nachfolgenden Beschreibung näher erläutert.

Es zeigen

Figur 1　ein schematisches Blockdiagramm eines Verfahrens und einer Vorrichtung zur Wankwinkelbestimmung für Insassenschutzvorrichtungen,

Figur 2　eine schematische Darstellung der Näherungsfunktionen von einer Sinus- und einer Kosinusfunktion,

Figur 3　eine schematische Darstellung des Verlaufs von verschiedenen Verfahren zur Wankwinkelschätzung, während einer Fahrt durch eine Steilkurve, und

Figur 4　eine schematische Darstellung des Verlaufs von verschiedenen Verfahren zur Wankwinkelschätzung, während einer Kreisfahrt.

Beschreibung

Generell sind bei Überschlägen frühzeitige Auslöseentscheidungen für die Insassenschutzmittel, z.B. für Gurtstraffer, Kopfairbag, Window-Airbag und Überrollbüge, sinnvoll und notwendig. Neben der lateralen Fahrzeuggeschwindigkeit stellt daher der Wankwinkel zu Beginn eines solchen Überschlagsvorganges eine wichtige Größe zur Vorausberechnung des Überschlagsgeschehens dar. Bei den bisher bekannten technischen Lösungen werden die Signale des Quer- und Hochbeschleunigungssensors lediglich zur Erkennung der Art des Überschlages und zur Plausibilisierung der mit einem Wankratensensor gemessenen Wankrate und des daraus berechneten Wankwinkels verwendet.

Zudem ist ein Verfahren zur Bestimmung des Absolutdrehwinkels eines sich um eine etwa waagrechte Achse drehenden Gegenstandes bekannt, bei welchem mit einem Hochbeschleunigungssensor und einem Wankratensensor der Absolutdrehwinkel des Fahrzeugs in einem beschränkten Intervall ermittelt werden kann.

Erfindungsgemäß wird nun ein Verfahren zur Wankwinkelbestimmung für Insassenschutzvorrichtungen und eine zugehörige Vorrichtung vorgeschlagen, welche eine Querbeschleunigung und eine Hochbeschleunigung des Fahrzeugs erfassen und den Wankwinkel des Fahrzeug basierend auf der erfassten Querbeschleunigung und der erfassten Hochbeschleunigung schätzen.

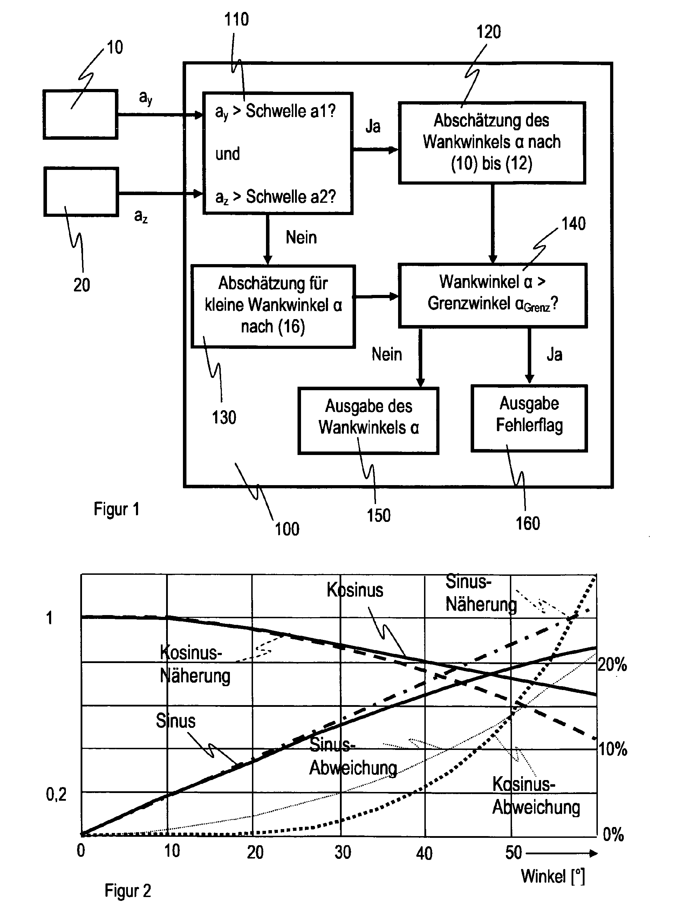

Wie aus Fig. 1 ersichtlich ist, umfasst eine erfindungsgemäße Vorrichtung zur Wankwinkelbestinnung für Insassenschutzvorrichtungen einen ersten Beschleunigungssensor 10 zur Erfassung einer Querbeschleunigung $a_y$, einen zweiten Beschleunigungssensor 20 zur Erfassung einer Hochbeschleunigung $a_z$ und eine Auswerteeinheit 100, welche den Wankwinkel $\alpha$ des Fahrzeugs basierend auf der erfassten Querbeschleunigung $a_y$ und der erfassten Hochbeschleunigung $a_z$ schätzt.

Nachfolgend werden die mathematischen Grundlagen und die daraus abgeleiteten Gleichungen beschrieben, welche die Auswerteeinheit 100 zur kontinuierlichen Bestimmung des aktuellen Wankwinkels benutzt. Die Beschleunigungen, welche ein Sensor im Fahrzeugschwerpunkt in der Nähe der Wankachse messen kann, lassen sich in der Auswerteeinheit 100 durch eine homogene Transformation gemäß Gleichung (1) aus den äußeren am Fahrzeug angreifenden Beschleunigungen in Weltkoordinaten berechnen.

$$\vec{a}_{Sensor} = X * \vec{a}_{außen} \tag{1}$$

Der äußere Beschleunigungsvektor setzt sich aus einer Beschleunigungskomponente in x-Richtung, welche beispielsweise durch Gas geben oder Bremsen des Fahrzeugs beeinflusst wird, einer Zentripetalbeschleunigungskomponente in y-Richtung, welche insbesondere bei Kurvenfahrten oder bei Kreisfahrten auftritt, sowie der Erdbeschleunigungskomponente in z-Richtung zusammen. Eine Drehung des Fahrzeugs um seine Längsachse um einen Wankwinkel $\alpha$ lässt sich durch eine Multiplikation des äußeren Beschleunigungsvektors mit einer 3x3-Matrix gemäß Gleichung (2) darstellen.

$$\vec{a}_{sensor} = \begin{pmatrix} 1 & 0 & 0 \\ 0 & \cos\alpha & -\sin\alpha \\ 0 & \sin\alpha & \cos\alpha \end{pmatrix} * \begin{pmatrix} -\dot{v} \\ \dfrac{v^2}{r} \\ g \end{pmatrix} \tag{2}$$

Da der erste Beschleunigungssensor 10 nur die Querbeschleunigung $a_y$ des Fahrzeugs erfasst, d.h. die y-Komponente, und der zweite Beschleunigungssensor 20 nur die Hochbeschleunigung $a_z$ des Fahrhzeugs erfasst, d.h. die z-Komponente, werden nach der Matrixmultiplikation nachfolgend nur die Zusammenhänge (3) und (4) betrachtet, welche die x-Komponenten und die y-Komponente der Fahrzeugbeschleunigung betreffen.

$$a_y = \cos\alpha * \frac{v^2}{r} - \sin\alpha * g \tag{3}$$

$$a_z = \sin\alpha * \frac{v^2}{r} + \cos\alpha * g \tag{4}$$

In den Gleichungen (3) und (4) sind neben dem Wankwinkel $\alpha$ auch noch die Zentripetalbeschleunigung $\dfrac{v^2}{r}$ unbekannt, wobei die Beschleunigungskomponenten $a_y$ und $a_z$ als Messwerte und die Erdbeschleunigung g als Konstante zur Verfügung stehen. Die Zentripetalbeschleunigung $\frac{v^2}{r}$ kann aus den Gleichungen (3) und (4) bestimmt werden. Da für die nachfolgenden Verfahren die Kenntnis der Fahrzeuggeschwindigkeit v oder dem Kurvenradius r nicht notwendig ist, kann die Zentripetalbeschleunigung $\frac{v^2}{r}$ als eine einzelne Größe bestimmt werden. Da bis auf den Wankwinkel $\alpha$ alle anderen Größen in den Gleichungen (3) und (4) bekannt sind, lassen sich daraus die beiden Unbekannten, nämlich die Zentripetalbeschleunigung $\frac{v^2}{r}$ und der Wankwinkel. $\alpha$ eindeutig berechnen.

Durch Quadrieren und nachfolgendem Addieren der Gleichungen (3) und (4) lässt sich die Zentripetalbeschleunigung $\frac{v^2}{r}$ gemäß Gleichung (5) bestimmen.

$$\frac{v^2}{r} = \pm\sqrt{a_y^2 + a_z^2 - g^2} \qquad (5)$$

Um aus den Gleichungen (3) und (4) den Wankwinkel $\alpha$ berechnen zu können, werden die trigonometrischen Funktionen durch die zugehörige Taylorreihenentwicklung angenähert. Gleichung (6) zeigt die Taylorreihenentwicklung für die Sinusfunktion und Gleichung (7) zeigt die Taylorreihenentwicklung für die Kosinusfunktion.

$$\sin\alpha \approx \alpha + o\left(\alpha^3\right) \qquad (6)$$

$$\cos\alpha \approx 1 - \frac{\alpha^2}{2} + o\left(\alpha^4\right) \qquad (7)$$

Für den weiteren Verlauf werden in den Reihenentwicklungen die höheren Ordnungen der Potenz von $\alpha$ vernachlässigt. Somit ergibt sich nach dem Einsetzen der Näherung (6) in die Gleichung (3) die Gleichung (8) und durch Einsetzen der Näherung (7) in die Gleichung (4) ergibt sich die Gleichung (9).

$$a_y = \left(1 - \frac{\alpha^2}{2}\right) * \frac{v^2}{r} - \alpha * g \qquad (8)$$

$$a_z = \alpha * \frac{v^2}{r} + \left(1 - \frac{\alpha^2}{2}\right) * g \qquad (9)$$

Durch Einsetzen der Zentripetalbeschleunigung $\frac{v^2}{r}$ aus Gleichung (5) können die Gleichungen (8) und (9) jede für sich nach dem Wankwinkel $\alpha$ aufgelöst werden. Darüber hinaus ergeben sich noch weitere Möglichkeiten, die Gleichungen (8) und (9) miteinander zu kombinieren, um den Wankwinkel $\alpha$ zu berechnen. Nachfolgend werden einige wichtige Beispiele angegeben:

So führt beispielsweise eine Multiplikation oder eine Division der Gleichungen (8) und (9) nach Auflösen der resultierenden quadratischen Gleichung auf die Gleichung (10).

$$\alpha_{1/2} = \frac{-\left(\frac{v^2}{r} * a_z + g * a_z\right) \pm \sqrt{\left(\frac{v^2}{r} * a_y + g * a_z\right)^2 + 2 * \left(\frac{v^2}{r} * a_z - g * a_y\right)^2}}{\left(\frac{v^2}{r} * a_z - g * a_y\right)} \qquad (10)$$

Eine Addition oder Subtraktion der Gleichungen (8) und (9) führt beispielsweise nach Auflösen der resultierenden quadratischen Gleichung auf die Gleichung (11)

$$\alpha_{1/2} = \frac{\left(\frac{v^2}{r} - g\right) \pm \sqrt{\left(\frac{v^2}{r} - g\right)^2 + 2\left(\frac{v^2}{r} + g\right) * \left(g + \frac{v^2}{r} - a_y - a_z\right)}}{\left(\frac{v^2}{r} + g\right)} \qquad (11)$$

Eine vorteilhaftere Variante ergibt sich, wenn die Gleichungen (8) und (9) jeweils nach dem quadratischen Term $\alpha^2$- aufgelöst und dann gleichgesetzt werden. Daraus ergibt sich für den Wankwinkel $\alpha$ die lineare Gleichung (12) mit nur einer Lösung:

$$\alpha = \frac{-a_y * g + a_z * \frac{v^2}{r}}{g^2 + \left(\frac{v^2}{r}\right)^2} \qquad (12)$$

Durch die erste Näherung der trigonometrischen Funktionen gemäß den Gleichungen (6) und (7) ist der gültige Winkelbereich der Gleichungen (10) bis (12) eingeschränkt.

Figur 2 zeigt die trigonometrischen Funktionen als durchgezogene Linien, die zugehörigen Näherungen nach den Gleichungen (6) und (7) als gestrichelte Linie für die angenäherte Kosinusfunktion und als strichpunktierte Linie für die Sinusfunktion, sowie den Näherungsfehler in Prozent als fett gepunktete Linie für die Kosinusfunktion und als dünn punktierte Linie für die Sinusfunktion. Wie aus Figur 2 ersichtlich ist, beträgt bis zu einem Wankwinkel von ca. 45° die Abweichung der Näherungsfunktionen weniger als 10%. Bei sehr kleinen Wankwinkeln, beispielsweise für Wankwinkel $\alpha \leq 10°$, kann die Näherung aus Gleichung (7) für die Kosinusfunktion noch weiter vereinfacht werden. Für den Kosinus ergibt sich dann die einfache Näherung gemäß Gleichung (13).

$$\cos \alpha \approx 1 + o(\alpha^2) \qquad (13)$$

Setzt man die Näherungen aus den Gleichungen (6) bzw. (13) in die Gleichungen (3) bzw. (4) ein, dann ergeben sich die Gleichungen (14) und (15).

$$a_y = \frac{v^2}{r} - \alpha * g \qquad (14)$$

$$a_z = \alpha * \frac{v^2}{r} + g \qquad (15)$$

Löst man die Gleichungen (14) und (15) jeweils nach der Zentripetalbeschleunigung $\dfrac{v^2}{r}$ auf und setzt diese dann gleich, so ergibt sich die Gleichung (16):

$$\alpha_{1/2} = \frac{-a_y \pm \sqrt{a_y^2 - 4*g*(g-a_z)}}{2*g} \qquad\qquad (16)$$

Der Vorteil von Gleichung (16) liegt darin, dass diese Gleichung die Schätzung des Wankwinkels $\alpha$ ohne die Zentripetalbeschleunigung $\dfrac{v^2}{r}$ ausfährt, welche gemäß Gleichung (5) berechnet werden kann. Dadurch entfallen mehrere Rechenoperationen, beispielsweise das Ziehen der Quadratwurzel in Gleichung (5), wodurch der Schätzvorgang des Wankwinkels $\alpha$ schneller wird.

Wie aus Fig. 1 weiter ersichtlich ist, werden die oben beschriebenen Berechnungen und Näherungen in der Auswerteeinheit 100 ausgeführt. So wird im Block 110 zur Unterscheidung, ob der aktuelle Wankwinkel $\alpha$ ein kleiner Winkel ist, beispielsweise Wankwinkel $\alpha \le 10°$, oder ob der aktuelle Wankwinkel $\alpha$ ein größerer Winkel ist, d.h. Wankwinkel $\alpha > 10°$, überprüft, ob die erfasste Querbeschleunigung $a_y$ größer als ein erster Schwellwert a1 ist und ob die erfasste Hochbeschleunigung $a_z$ größer als ein zweiter Schwellwert a2 ist.

Sind beide erfassten Beschleunigungswerte $a_y$ und $a_z$ größer als ihre zugehörigen Schwellwerte, dann wird daraus geschlossen, dass der aktuelle Wankwinkel $\alpha$ einen größeren Wert aufweist und der aktuelle Wankwinkel wird im Block 120 nach der Gleichung (10) und/oder der Gleichung (11) und/oder nach der Gleichung (12) geschätzt. Anschließend wird der geschätzte Wankwinkel $\alpha$ im Block 140 mit einem vorgegebenen Grenzwinkel $\alpha_{Grenz}$ verglichen. Ist der geschätzte Wankwinkel größer oder gleich dem vorgegebenen Grenzwinkel $\alpha_{Grenz}$, dann wird der geschätzte Wert für den Wankwinkel $\alpha$ verworfen und im Block 160 ein Fehlerflag ausgegeben. Ist der geschätzte Wankwinkel $\alpha$ kleiner als der vorgegebene Grenzwinkel $\alpha_{Grenz}$ dann wird der geschätzte Wankwinkel $\alpha$ als plausibel betrachtet und im Block 150 ausgegeben, beispielsweise an nachfolgende Auslöseverfahren für Insassenschutzvorrichtungen, welche bei der Auslöseentscheidung den aktuell geschätzten Wankwinkel berücksichtigen.

Ergibt die Überprüfung im Block 110, dass die beiden erfassten Beschleunigungswerte $a_y$ oder $a_z$ nicht größer als ihre zugehörigen Schwellwerte sind, dann wird daraus geschlossen, dass der aktuelle Wankwinkel $\alpha$ einen kleineren Wert aufweist. Der aktuelle Wankwinkel wird dann im Block 130 nach der Gleichung (16) geschätzt. Anschließend wird der geschätzte Wankwinkel $\alpha$ im Block 140 mit einem vorgegebenen Grenzwinkel $\alpha_{Grenz}$ verglichen. In Abhängigkeit des Vergleichsergebnisses wird, wie oben bereits ausgeführt ist, im Block 160 das Fehlerflag oder im Block 150 der geschätzte Wankwinkel ausgegeben.

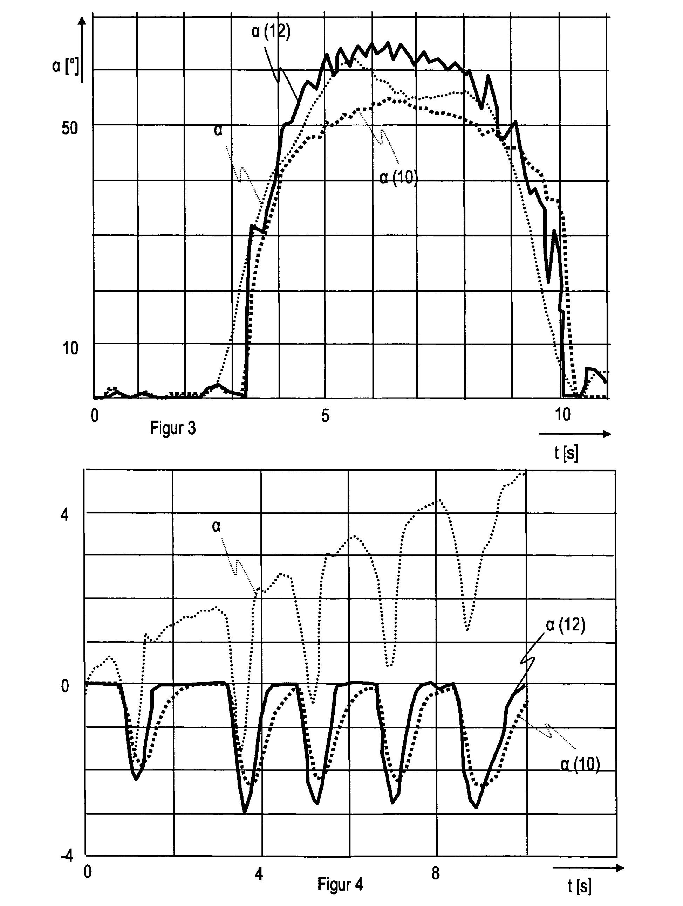

Figur 3 zeigt eine schematische Darstellung des Verlaufs von verschiedenen Verfahren zur Wankwinkelschätzung, während einer Fahrt durch eine Steilkurve. So zeigt die gepunktete mit $\alpha$ bezeichnete Linie den Verlauf des Wankwinkels, der durch eine herkömmliche Aufintegration der Wankrate bestimmt wird. Die fette mit $\alpha(12)$ bezeichnete Linie zeigt den Verlauf des Wankwinkels $\alpha$, welcher durch das erfindungsgemäße Verfahren unter Verwendung der Gleichung (12) bestimmt wird. Die gepunktete, fette mit a(10) bezeichnete Linie zeigt den Verlauf des Wankwinkels $\alpha$, welcher durch das erfindungsgemäße Verfahren unter Verwendung der Gleichung (10) bestimmt wird.

Figur 4 zeigt eine schematische Darstellung des Verlaufs von verschiedenen Verfahren zur Wankwinkelschätzung, während einer Kreisfahrt. So zeigt die gepunktete mit $\alpha$ bezeichnete Linie den Verlauf des Wankwinkels, der durch eine herkömmliche Aufintegration der Wankrate bestimmt wird. Die fette mit $\alpha(12)$ bezeichnete Linie zeigt den Verlauf des Wankwinkels $\alpha$, welcher durch das erfindungsgemäße Verfahren unter Verwendung der Gleichung (12) bestimmt wird. Die gepunktete, fette mit $\alpha(10)$ bezeichnete Linie zeigt den Verlauf des Wankwinkels $\alpha$, welcher durch das erfindungsgemäße Verfahren unter Verwendung der Gleichung (10) bestimmt wird. Wie aus Figur 4 ersichtlich ist, zeigt die Kurve $\alpha$, welche die Aufintegration des Winkels durch die Wankrate repräsentiert, einen deutlichen Drift durch einen Wankratenoffset, was einen Nachteil bei der Winkelbestimmung durch die Wankrate darstellt. Die anderen beiden Kurven $\alpha(10)$ und $\alpha(12)$ zeigen, dass dieses Problem bei dem erfindungsgemäßen Verfahren zur Wankwinkelbestimmung nicht auftritt, welches auf den erfassten Beschleunigungskomponenten $a_y$ und $a_z$ basiert.

**Patentansprüche**

**1.** Verfahren zur Wankwinkelbestimmung für Insassenschutzvorricchtungen, wobei

- eine Querbeschleunigung ($a_y$) und
- eine Hochbeschleunigung ($a_z$) des Fahrzeugs erfasst werden

,wobei der Wankwinkel ($\alpha$) des Fahrzeug basierend auf der erfassten Querbeschleunigung ($a_y$) und der erfassten Hochbeschleunigung ($a_z$) geschätzt wird,**dadurch gekennzeichnet, dass** die erfasste Querbeschleunigung ($a_y$) mit einem ersten Schwellwert (a1) verglichen wird und die erfasste Hochbeschleunigung ($a_z$) mit einem zweiten Schwellwert (a2) verglichen wird, wobei der Wankwinkel ($\alpha$) mit einer ersten Näherung geschätzt wird, wenn die Querbeschleunigung ($a_y$) größer als der erste Schwellwert (a1) ist und die Hochbeschleunigung ($a_z$) größer als der zweite Schwellwert (a2) ist, und wobei der Wankwinkel ($\alpha$) mit einer zweiten Näherung geschätzt wird, wenn die Querbeschleunigung ($a_y$) kleiner oder gleich dem ersten Schwellwert (a1) ist und/oder die Hochbeschleunigung ($a_z$) kleiner oder gleich dem zweite Schwellwert (a2) ist und wobei die trigonometrischen Funktionen zur Schätzung des Wankwinkels ($\alpha$) durch die zugehörigen Taylorreihen-entwicklungen angenähert werden, wobei für die erste und zweite Näherung eine Sinusfunktion des Wankwinkels ($\alpha$) nach dem Zusammenhang $\sin\alpha \approx \alpha + o(\alpha^2)$ angenähert wird, wobei eine Kosinusfunktion des Wankwinkels ($\alpha$) für die erste Näherung nach dem Zusamrrienhang $\cos\alpha \approx 1 - \alpha^2/2 + o(\alpha^4)$ angenähert wird, und für die zweite Näherung nach dem Zusammenhang $\cos\alpha \approx 1 + o(\alpha^2)$ angenähert wird.

2. Verfahren nach einem der Ansprüche 1, weiter **dadurch gekennzeichnet, dass** der geschätzte Wankwinkel ($\alpha$) mit einem Grenzwinkel ($\alpha_{Grenz}$) verglichen wird, wobei ein Fehlerflag gesetzt wird, wenn der geschätzt Wankwinkel ($\alpha$) den Grenzwinkel ($\alpha_{Grenz}$) übersteigt, und wobei sonst der geschätzte Wankwinkel ($\alpha$) ausgegeben wird.

3. Verfahren nach einem der Ansprüche 1 bis 2, **dadurch gekennzeichnet, dass** der Wankwinkel ($\alpha$) bei der ersten Näherung gemäß der Gleichung

$$\alpha_{1/2} = \frac{-\left(\frac{v^2}{r}*a_z + g*a_z\right) \pm \sqrt{\left(\frac{v^2}{r}*a_y + g*a_z\right)^2 + 2*\left(\frac{v^2}{r}*a_z - g*a_y\right)^2}}{\left(\frac{v^2}{r}*a_z - g*a_y\right)}$$

geschätzt wird.

4. Verfahren nach einem der Ansprüche 1 bis 3, **dadurch gekennzeichnet, dass** der Wankwinkel ($\alpha$) bei der ersten Näherung gemäß der Gleichung

$$\alpha_{1/2} = \frac{-\left(\frac{v^2}{r} - g\right) \mp \sqrt{\left(\frac{v^2}{r} - g\right)^2 + 2*\left(\frac{v^2}{r} + g\right)*\left(g + \frac{v^2}{r} - a_y - a_z\right)}}{\left(\frac{v^2}{r} + g\right)}$$

geschätzt wird.

5. Verfahren nach einem der Ansprüche 1 bis 4 **dadurch gekennzeichnet, dass** der Wankwinkel ($\alpha$) bei der ersten Näherung gemäß der Gleichung

$$\alpha = \frac{-a_y*g + a_z*\frac{v^2}{r}}{g^2 + \left(\frac{v^2}{r}\right)^2}$$

geschätzt wird.

**6.** Verfahren nach einem der Ansprüche 4 bis 5, **dadurch gekennzeichnet, dass** die Zentripetalgbeschleunigung $\left(\dfrac{v^2}{r}\right)$ nach der Gleichung $\dfrac{v^2}{r} = \pm\sqrt{a_y^2 + a_z^2 - g^2}$ berechnet wird

**7.** Verfahren nach einem der Ansprüche 1 bis 6, **dadurch gekennzeichnet, dass** der Wankwinkel ($\alpha$) bei der zweiten Näherung gemäß der Gleichung

$$\alpha_{1/2} = \frac{-a_y \pm \sqrt{a_y^2 - 4*g*(g - a_z)}}{2*g}$$

geschätzt wird.

**8.** Vorrichtung zur Wankwinkelbestimmung für Insassenschutzvorrichtungen, insbesondere zur Durchführung des Verfahrens nach einem der Ansprüche 1 bis 7, **gekennzeichnet durch**

- einen ersten Beschleunigungssensor (10) zur Erfassung einer Querbeschleunigung ($a_y$) eines Fahrzeugs,
- einen zweiten Beschleunigungssensor (20) zur Erfassung einer Hochbeschleunigung ($a_z$) des Fahrzeugs, **dadurch gekennzeichnet, dass** eine Auswerteeinheit (100) vorgegeben ist, welche den Wankwinkel ($\alpha$) des Fahrzeugs basierend auf der erfassten Querbeschleunigung ($a_y$) und der erfassten Hochbeschleunigung ($a_z$) schätzt, dass die Auswerteeinheit (100) die Querbeschleunigung ($a_y$) mit einem ersten Schwellwert (a1) und die Hochbeschleunigung ($a_z$) mit einem zweiten Schwellwert (a2) vergleicht und in Abhängigkeit von den Vergleichsergebnissen den Wankwinkel ($\alpha$) mit einer ersten Näherung oder mit einer zweiten Näherung schätzt.

## Claims

**1.** Method for determining the rolling angle for vehicle occupant protection devices, wherein

- a lateral acceleration ($a_y$) and
- a vertical acceleration ($a_z$) of the vehicle are acquired, wherein the rolling angle ($\alpha$) of the vehicle is estimated on the basis of the acquired lateral acceleration ($a_y$) and the acquired vertical acceleration ($a_z$), **characterized in that** the acquired lateral acceleration ($a_y$) is compared with a first threshold value (a1), and the acquired vertical acceleration ($a_z$) is compared with a second threshold value (a2), wherein the rolling angle ($\alpha$) is estimated with a first approximation if the lateral acceleration ($a_y$) is greater than the first threshold value (a1) and the vertical acceleration ($a_z$) is greater than the second threshold value (a2), and wherein the rolling angle ($\alpha$) is estimated with a second approximation if the lateral acceleration ($a_y$) is smaller than or equal to the first threshold value (a1) and/or the vertical acceleration ($a_z$) is smaller than or equal to the second threshold value (a2), and

wherein the trigonometric functions for estimating the rolling angle ($\alpha$) are approximated by the associated Taylor series developments,
wherein, for the first and second approximations, a sine function of the rolling angle ($\alpha$) is approximated according to the relationship $\sin \alpha \approx \alpha + o(\alpha^2)$,
wherein a cosine function of the rolling angle ($\alpha$) for the first approximation is approximated according to the relationship $\cos \alpha \approx 1 - \alpha^2/2 + o(\alpha^4)$, and for the second approximation, said cosine function is approximated according to the relationship $\cos \alpha \approx 1 + o(\alpha^2)$.

**2.** Method according to Claim 1, further **characterized in that** the estimated rolling angle ($\alpha$) is compared with a limiting angle ($\alpha_{limit}$), wherein an error flag is set if the estimated rolling angle ($\alpha$) exceeds the limiting angle ($\alpha_{limit}$), and wherein otherwise the estimated rolling angle ($\alpha$) is output.

**3.** Method according to one of Claims 1 to 2,
**characterized in that** the rolling angle ($\alpha$) in the first approximation is estimated according to the equation

$$\alpha_{1/2} = \frac{-\left(\frac{v^2}{r} * a_z + g * a_z\right) \pm \sqrt{\left(\frac{v^2}{r} * a_y + g * a_z\right)^2 + 2 * \left(\frac{v^2}{r} * a_z - g * a_y\right)^2}}{\left(\frac{v^2}{r} * a_z - g * a_y\right)}$$

**4.** Method according to one of Claims 1 to 3,
**characterized in that** the rolling angle ($\alpha$) in the first approximation is estimated according to the equation

$$\alpha_{1/2} = \frac{-\left(\frac{v^2}{r} - g\right) \mp \sqrt{\left(\frac{v^2}{r} - g\right)^2 + 2 * \left(\frac{v^2}{r} + g\right) * \left(g + \frac{v^2}{r} - a_y - a_z\right)}}{\left(\frac{v^2}{r} + g\right)}$$

**5.** Method according to one of Claims 1 to 4,
**characterized in that** the rolling angle ($\alpha$) in the first approximation is estimated according to the equation

$$\alpha = \frac{-a_y * g + a_z * \frac{v^2}{r}}{g^2 + \left(\frac{v^2}{r}\right)^2}$$

**6.** Method according to one of Claims 4 to 5,

**characterized in that** the centripetal acceleration $\left(\frac{v^2}{r}\right)$ is calculated according to the equation

$$\frac{v^2}{r} = \pm\sqrt{a_y^2 + a_z^2 - g^2}$$

**7.** Method according to one of Claims 1 to 6,
**characterized in that** the rolling angle ($\alpha$) in the second approximation is estimated according to the equation

$$\alpha_{1/2} = \frac{-a_y \pm \sqrt{a_y^2 - 4 * g * (g - a_z)}}{2 * g}$$

8. Device for determining the rolling angle for vehicle occupant protection devices, in particular in order to carry out the method according to one of Claims 1 to 7, **characterized by**

   - a first acceleration sensor (10) for acquiring a lateral acceleration ($a_y$) of a vehicle,
   - a second acceleration sensor (20) for acquiring a vertical acceleration ($a_z$) of the vehicle, **characterized in that** an evaluation unit (100) is predefined which estimates the rolling angle ($\alpha$) of the vehicle on the basis of the acquired lateral acceleration ($a_y$) and the acquired vertical acceleration ($a_z$), **in that** the evaluation unit (100) compares the lateral acceleration ($a_y$) with a first threshold value (a1) and the vertical acceleration ($a_z$) with a second threshold value (a2), and estimates the rolling angle ($\alpha$) with a first approximation or with a second approximation as a function of the comparison results.

**Revendications**

1. Procédé de détermination de l'angle de roulis pour des dispositifs de protection des passagers, selon lequel on saisit :

   - une accélération transversale (ay) et
   - une accélération verticale ($a_z$) du véhicule,

   on évalue l'angle de roulis ($\alpha$) du véhicule en fonction de l'accélération transversale saisie ($a_y$) et de l'accélération verticale saisie ($a_z$),
   **caractérisé en ce qu'**
   on compare l'accélération transversale saisie ($a_y$) à une première valeur de seuil (a1) et on compare l'accélération verticale saisie ($a_z$) à une seconde valeur de seuil (a2),
   on évalue l'angle de roulis ($\alpha$) avec une première approximation si l'accélération transversale ($a_y$) est supérieure à la première valeur de seuil (a1) et si l'accélération verticale ($a_z$) est supérieure à la seconde valeur de seuil (a2) et on évalue l'angle de roulis ($\alpha$) avec une seconde approximation si l'accélération transversale ($a_y$) est inférieure ou égale à la première valeur de seuil (a1) et/ou l'accélération verticale ($a_z$) est inférieure ou égale à la seconde valeur de seuil (a2) et
   on fait une approximation des fonctions trigonométriques pour évaluer l'angle de roulis ($\alpha$) par des développements en séries de Taylor,
   et pour la première et la seconde approximation on prend l'approximation d'une fonction sinus de l'angle de roulis ($\alpha$) suivant la relation $\sin \alpha = \alpha + O(\alpha^2)$,
   on utilise une approximation de la fonction cosinus de l'angle ($\alpha$) pour la première approximation suivant la relation $\cos \alpha \approx 1 - \alpha^2/2 + O(\alpha^4)$ et
   pour la seconde approximation on procède selon la relation $\cos \alpha \approx 1 + O(a^2)$.

2. Procédé selon la revendication 1,
   **caractérisé en ce qu'**
   on compare l'angle de roulis ($\alpha$), évalué à un angle limite ($\alpha_{Grenz}$) et on fixe un drapeau de défaut si l'angle de roulis évalué ($\alpha$) dépasse l'angle limite ($\alpha_{Grenz}$) et dans le cas contraire on émet l'angle de roulis évalué ($\alpha$).

3. Procédé selon l'une des revendications 1 à 2,
   **caractérisé en ce que**
   l'angle de roulis ($\alpha$) est évalué en première approximation selon l'équation suivante :

$$\alpha_{1/2} = \frac{-\left(\dfrac{v^2}{r} * a_z + g * a_z\right) \pm \sqrt{\left(\dfrac{v^2}{r} * a_y + g * a_z\right)^2 + 2 * \left(\dfrac{v^2}{r} * a_z - g * a_y\right)^2}}{\left(\dfrac{v^2}{r} * a_z - g * a_y\right)}$$

4. Procédé selon l'une des revendications 1 à 3,
   **caractérisé en ce qu'**
   on évalue l'angle de roulis ($\alpha$) pour la première approximation selon l'équation :

$$\alpha_{1/2} = \frac{-\left(\dfrac{v^2}{r} - g\right) \pm \sqrt{\left(\dfrac{v^2}{r} - g\right)^2 + 2*\left(\dfrac{v^2}{r} + g\right)*\left(g + \dfrac{v^2}{r} - a_y - a_z\right)}}{\left(\dfrac{v^2}{r} + g\right)}$$

**5.** Procédé selon l'une des revendications 1 à 4,
**caractérisé en ce qu'**
on évalue l'angle ($\alpha$) en première approximation selon l'équation :

$$\alpha = \frac{-a_y * g + a_z * \dfrac{v^2}{r}}{g^2 + \left(\dfrac{v^2}{r}\right)^2}$$

**6.** Procédé selon l'une des revendications 4 à 5,
**caractérisé en ce qu'**

on calcule l'accélération centripète $\left(\dfrac{v^2}{r}\right)$ selon l'équation

$$\frac{v^2}{r} = \pm\sqrt{a_y^2 + a_z^2 - g^2}$$

**7.** Procédé selon l'une des revendications 1 à 6,
**caractérisé en ce qu'**
on évalue l'angle de roulis ($\alpha$) pour la seconde approximation selon l'équation

$$\alpha_{1/2} = \frac{-a_y \pm \sqrt{a_y^2 - 4 * g * (g - a_z)}}{2 * g}$$

**8.** Dispositif pour déterminer l'angle de roulis destiné à des dispositifs de protection des passagers, notamment pour la mise en oeuvre du procédé selon l'une des revendications 1 à 7,
**caractérisé par**

    - un premier capteur d'accélération (10) pour saisir l'accélération transversale ($a_y$) du véhicule,
    - un second capteur d'accélération (20) pour saisir une accélération verticale ($a_z$) du véhicule,

**caractérisé en ce qu'**
il est prévu une unité d'exploitation (100) qui évalue l'angle de roulis ($\alpha$) du véhicule en fonction de l'accélération transversale saisie ($a_y$) et de l'accélération verticale saisie ($a_z$),
l'unité d'exploitation (100) compare l'accélération transversale ($a_y$) à une première valeur de seuil (a1) et l'accélération verticale ($a_z$) à une valeur de seuil (a2) et en fonction des résultats de la comparaison on évalue l'angle de roulis ($\alpha$) selon une première approximation ou selon une seconde approximation.

110

10

120

$a_y$

$a_y$ > Schwelle a1?

und

$a_z$ > Schwelle a2?

Ja

Abschätzung des
Wankwinkels α nach
(10) bis (12)

$a_z$

20

Nein

140

Abschätzung für
kleine Wankwinkel α
nach (16)

Wankwinkel α >
Grenzwinkel $α_{Grenz}$?

130

Nein

Ja

Ausgabe des
Wankwinkels α

Ausgabe
Fehlerflag

Figur 1

100

150

160

Kosinus

Sinus-
Näherung

1

Kosinus-
Näherung

20%

Sinus

Sinus-
Abweichung

10%

0,2

Kosinus-
Abweichung

0%

0    10    20    30    40    50

Winkel [°]

Figur 2

13

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2001044020 A
- EP 1258399 A2